# EUROPÄISCHE PATENTSCHRIFT

(11) **EP 1 014 645 B1**
(45) Veröffentlichungstag und Bekanntmachung des Hinweises auf die Patenterteilung: **18.05.2005**
(21) Anmeldenummer: 99125673.6
(22) Anmeldetag: 22.12.1999
(51) Int. Cl.: H04L 29/06, G06F 17/60

(54) **Verfahren zum Betrieb komfortabler Mehrwertdienste in Telekommunikationsnetzen**
Method for managing comfortable value added services in telecommunication networks
Procédé pour la gestion de services à valeurs ajoutées confortables dans des réseaux de télécommunications

(30) Priorität: 22.12.1998 DE 19859350
(43) Veröffentlichungstag der Anmeldung: 28.06.2000
(73) Patentinhaber: T-Mobile Deutschland GmbH, 53227 Bonn (DE)
(72) Erfinder: Keller, Walter, 40880 Ratingen (DE)
(74) Vertreter: Riebling, Peter, Dr.-Ing.

(56) Entgegenhaltungen:
- WO-A-98/15091
- US-A- 5 559 800
- US-A- 5 684 950
- WAP FORUM: "Wireless Application Protocol Architecture Specification" WAP ARCHITECTURE, [Online] 30. April 1998 (1998-04-30), Seiten 1-20, XP002234049 Gefunden im Internet: <URL:http://www1.wapforum.org/tech/documen ts/SPEC-WAPArch-19980430.pdf> [gefunden am 2003-02-21]
- JOHNSON D: "CONVERTING PC GUIS FOR NON PC DEVICES" CIRCUIT CELLUR INK, VERNON, CT, US, Bd. 91, Februar 1998 (1998-02), Seiten 40-42,44-45, XP000852859 ISSN: 0896-8985

## Beschreibung

Die Erfindung betrifft ein Verfahren zum Betrieb komfortabler Mehrwertdienste in Telekommunikationsnetzen.

Es existieren unterschiedliche Verfahren zur Realisierung von Mehrwertdiensten in Telekommunikationsnetzen, die jedoch alle über spezifische Nachteile und Restriktionen verfügen, so daß derzeit kein Verfahren bekannt ist, das die der Erfindung zugrunde liegende Aufgabenstellung löst.
So werden Mehrwertdienste in Telekommunikationsnetzen (Festnetz, Mobilfunknetz) derzeit als "Dienste" des Netzbetreibers angeboten. Üblich sind kommunikationsspezifische Dienste, die den verbindungsorientierten Verkehr erleichtern oder erweitern. Die bekanntesten Vertreter dieser Art sind ISDN-(Integrated Services Digital Network) und GSM- (Global System for Mobile Communications) Leistungsmerkmale der entsprechenden ETSI- (European Telecommunications Standards Institute) Empfehlungen, wie Rufumleitung, Rufweiterleitung, Rückruf bei Besetzt, Anklopfen etc. Diese Dienste werden netzbetreiberseitig im Telekommunikationsnetz (in den Vermittlungsstellen bzw. in der intelligenten Netzsteuerung SCP (Service Control Point) und SMS (Service Management System) implementiert und betrieben. Grundlagen lassen sich dem Buch von Biala, Jacek: Mobilfunk und Intelligente Netze", Viehweg und Sohn Verlagsgesellschaft mbH, 1996, entnehmen.

Daneben existieren Mehrwertdienste, wie Mailbox (Anrufbeantworter), Messaging, Ansagedienste, Informationsdienste (Wetter, Lottozahlen, Nachrichten o.ä.), die ebenfalls netzbetreiberseitig, jedoch auf Serverlösungen basierend, angeboten werden. Hierunter können auch Verkehrsinformationsdienste gruppiert werden, wie sie beispielsweise im Serviceverbund DeTeMobil Deutsche Telekom MobilNet GmbH und TEGARON GmbH angeboten werden. Diese Servicekategorie kann in der Regel nur von netzspezifischen Kunden mittels einer Kurzwahlnummer erreicht werden, wobei in der Regel mit der Anwahl des Servers die Inanspruchnahme des Dienstes verbunden ist und ein entsprechendes Entgelt automatisch über die Telekommunikationsrechnung gebucht wird.

Als weitere Kategorie von Mehrwertdiensten können Internet-Zugang und Online-Dienste betrachtet werden. Die entsprechenden "Dienste" werden jedoch in alter Regel transparent im Telekommunikationsnetz übertragen, wobei die eigentliche Telekommunikationsdienstleistung in der Realisierung der Netzübergänge zum Point of Presence POP des Internet Service Providers ISP besteht. Der ISP führt dabei die Authentisierung, die Verwaltung und in der Regel eine zeitabhängige Tarifierung seiner Kunden durch. In der Regel kann sich der ISP-Kunde über beliebige Telekommunikationsnetze bei seinem ISP einwählen, mit dem er ein Vertragsverhältnis abgeschlossen hat.
Zusätzlich bieten einige Telekommunikationsnetzbetreiber den Internetzugang als Dienst an, indem sie eine entsprechende Kooperationsvereinbarung mit einem bestimmten ISP getroffen haben und in dieser Geschäftsbeziehung die Zugangsgebühren des ISP und ggf. etwaige zusätzliche Gebühren aus dem Online-Dienste-Angebot des ISP auf der Telekommunikationsrechnung (bisher Fernmelderechnung) mit aufführen. Dies ist beispielsweise bei Telekom und T-Online der Fall.
In letzter Zeit bieten private Netzbetreiber auch den Internetübergang derart an, indem sie selbst als ISP fungieren und ihren Kunden den direkten Übergang ins Internet ermöglichen. Beide Konzepte unterscheiden sich jedoch weniger in der technischen Realisierung, als vielmehr in der entsprechenden Untemehmensphilosophie.

Transaktionsgeschäfte im Internet (Shopping etc.) werden in der Regel derart abgewickelt, das der Kunde die entsprechende Bestellung im direkten Kontakt mit dem Lieferanten online am PC durchführt, indem er transparent über das Internet mit dem spezifischen Lieferanten (dessen Server) kommuniziert und auf diese Weise schriftlich disponieren kann. Üblich sind hierzu www- (HTML) und e-mail-Verfahren (vgl. InterNetworking, Petra Barowka, Datacom, International Thomson Publishing Verlag mbH, Bonn 1998). Das Verfahren ist wegen der entsprechenden ungeschützten Übertragung im Internet und dem anonymen Zugangsverfahren rechtlich nicht bindend und hat den vergleichbaren Stellenwert, wie eine fernmündliche Bestellung. Bei größeren Transaktionen folgt in der Regel ein Austausch von Schriftstücken (Vertrag). Bei kleineren Transaktionen genügt - insbesondere in angelsächsischen Ländern - oft die Angabe der eigenen Kreditkartendaten. Mit diesen Daten bucht der Lieferant dann ab. Etwaige Probleme werden später gelöst. Insbesondere im Bankenbereich existieren daher unterschiedliche Verschlüsselungs- und Zugangsberechtigungsverfahren, um den Kundenzugang zu sichern.

All diese Verfahren betreffen jedoch nicht den Telekommunikationsnetzbetreiber sowie in der Regel auch nicht den ISP, der den Nachrichteninhalt seiner Kunden auch nicht kennt, sondern werden Ende-zu-Ende auf Basis der standardisierten Internettechniken sowie den Telekommunikationsnetzen als Zugangsnetz der Kunden gelöst.

Das Internet-Verfahren besitzt neben den angeführten Restriktionen u. a. noch ein Zugangsproblem für Telekommunikationskunden. Es setzt nämlich einen leistungsfähigen Personal Computer PC mit entsprechender Software sowie ein bestimmtes Minimum an technischer Expertise und weiterhin einen nicht unbeträchtlichen Pflegeaufwand dieser Einrichtungen durch den sachkundigen Benutzer voraus.
Daran ändern prinzipiell auch die immer kleiner werdenden Abmaße von PCs (Notebook, Palmtop, Personal Digital Assistent etc.) mit ggf. einer Integration von Sprachendgeräten oder die Integration von Web-Browsem in Fernsehgeräte (vgl. c't Magazin für Computertechnik, 12/1998, Heise Verlag, Seite 160,"Set-Top-Boxen und Web-Fernseher") prinzipiell wenig.

Hinzu kommt der in der Regel beträchtliche Zeit- und Suchaufwand sowohl zum Einwählen und Authorisieren beim ISP sowie für den eigentlichen Zieldienst (die Web-Page), die vergleichsweise sehr geringen Möglichkeiten der Telekommunikationsnetzbetreiber, solche Services für ihre Kunden zu unterstützen und kommerziell zu vermarkten sowie der Umstand, daß sowohl die erforderlichen Bedienverfahren, die Technologie und die endgeräte- und anwendungsspezifischen Randbedingungen teilweise hinderlich sind, so z. B. im mobilen Einsatzbereich.

In WAP FORUM: "Wireless Application Protocol Architecture Specification", "WAP Architecture", 30. April 1998, Seiten 1-20, XP002234049, ist der bei Mobilfunksystemen bekannten WAP-Dienst beschrieben, weicher eine Nutzung von Internetdiensten über ein Mobilfunkendgerät ermöglicht. Über WAP ist ein Betrieb komfortabler Mehrwertdienste in Telekommunikationsnetzen möglich, bei dem eine Servereinrichtung (WAP-Gateway) funktional zwischen einem Serviceprovider und einem Endnutzer derart angeordnet wird, daß die Servereinrichtung eine Aufbereitung des Datenformats von auf elektronischem Wege vom Serviceprovider empfangenen Daten für die dem Telekommunikationsnetz zugeordneten Teilnehmer vomimmt, um die Internet-Daten überhaupt auf dem Mobilfunkendgerät darstellen zu können. Nach Durchführung einer entsprechenden Authentisierung werden die Daten dem Teilnehmer in dessen Endgerät präsentiert. Es ist auch ein umgekehrter Übertragungsweg vorgesehen, über den der Nutze über das Endgerät einzugebende Daten an den Serviceprovider übermitteln kann. Der Inhalt und die Qualität der übermittelten Daten wird durch die Servereinrichtung nicht geändert.

Johnson, D.: "Converting PC GUls for Non PC Devices", in: Circuit Cellar Ink, Vemon, CT, US, Bd. 91, February 1998, Seiten 40-42, 44-45, XP000852859, beschreibt Verfahren, wie Informationen aus dem Intemet mit Hilfe sogenannter GUIs (Graphic User Interfaces) an Endgeräte mit unterschiedlichen grafischen Fähigkeiten angepasst werden können. Hierzu werden in einer Datenbank verschiedene Konversions- und Filter-Präferenzen vorgehalten und je nach benutztem Endgerät angewendet. Auch hier wird der eigentliche Inhalt und die Qualität der Daten durch die Konvertierung nicht beeinflusst.

Der vorliegenden Erfindung liegt die Aufgabe zugrunde, ein neues Verfahren zum Betrieb komfortabler Mehrwertdienste in Telekommunikationsnetzen vorzuschlagen. Dabei sollen insbesondere im Dreiecksverhältnis von Anbietern, Netzbetreibern und Kunden auf der Basis neuer technischer Verfahren zahlreiche neue Mehrwertdienste sowie neue Vermarktungswege für vorhandene Dienstleistungen und Produkte mit kommerziellen Vorteilen für alle Beteiligten ermöglicht werden. Insbesondere sollen individuell an den Kunden angepasste Mehrwertdienste ermöglicht werden.

Gelöst wird diese Aufgabe durch die Merkmale des Patentanspruchs 1.

Das erfindungsgemäße Verfahren kombiniert die Möglichkeiten zur anwendungsund endgeräteoptimierten Aufbereitung von Informationen externer Serviceprovider und Anbieter beliebiger Art, die Einbeziehung vorhandener kundenspezifischer Daten der Telekommunikationsnetzbetreiber zur bequemen Handhabung bei insbesondere Dispositionsvorgängen (Buchen, Bestellen, Reservieren etc.) und die mögliche Einflußnahme der Netzbetreiber auf Inhalt und Qualität der angebotenen Dienstleistungen zwecks Ausarbeitung von Alleinstellungsmerkmalen und Wettbewerbsvorteilen.

Prinzipiell können mit der erfindungsgemäßen Verfahrensweise beliebige hochwertige Mehrwertdienste beispielsweise der Bereiche Buchungen, Reservierungen, Fahrkartenkauf, Bestellverfahren jedweder Art, Lotterieteilnahme, Auktionsdienste, Votierungsdienste, Brokerdienste, Abonnementdienste, Versicherungsdienste etc. unter Verwendung handelsüblicher Telekommunikationsendgeräte (vorzugsweise mit großem Display, aber beispielsweise auch sprachgesteuert) mit einfachen Bedienverfahren für Telekommunikationskunden zugänglich gemacht werden. Durch ein individuelles Angebot und entsprechende Menüaufbereitung sowie durch das in der Regel bestehende Vertragsverhältnis zwischen Netzbetreiber (TSA) und Serviceprovider kann der Netzbetreiber entsprechende Alleinstellungsmerkmale und Wettbewerbsvorteile durch eine entsprechende Angebotsqualität sowie die zumindest teilweise Weiterreichung etwaiger Großkundenrabatte, Umsatzprovisionen o.ä. generieren.

Vorteilhafte Ausführungsformen und Ausgestaltungen der Erfindung sind in den abhängigen Patentansprüchen angegeben.

Die Erfindung wird nachfolgend unter Verwendung von Zeichnungsfiguren, die hier lediglich eine mögliche Ausführungsart am Beispiel von Buchungs- und Reservierungsdiensten in Verbindung des bundesweiten Start-Amadeus-Dienstes mit dem GSM-Mobilfuknetz in schematischer Darstellung beschreiben, erläutert, wobei sich anhand der Zeichnungsfiguren weitere Anwendungsgebiete und Ansprüche ergeben. Es zeigen:
- Fig. 1:: eine schematische Anordnung zur Abwicklung von Mehrwertdiensten nach dem erfindungsgemäßen Verfahren;
- Fig. 2:: Funktionsschema des erfindungsgemäßen Verfahrens;
- Fig. 3:: Datenstrukturschema beim erfindungsgemäßen Verfahren.

Zur Vereinfachung werden die mit dem erfindungsgemäßen Verfahren realisierten Mehrwertdienste nachfolgend, ohne damit einhergehend eine Einschränkung auf bestimmte bestehende Dienstleistungen, Rechtsformen und Verfahrensweisen o.ä. vorzunehmen, mit dem Begriff "Agenturdienste" bezeichnet.

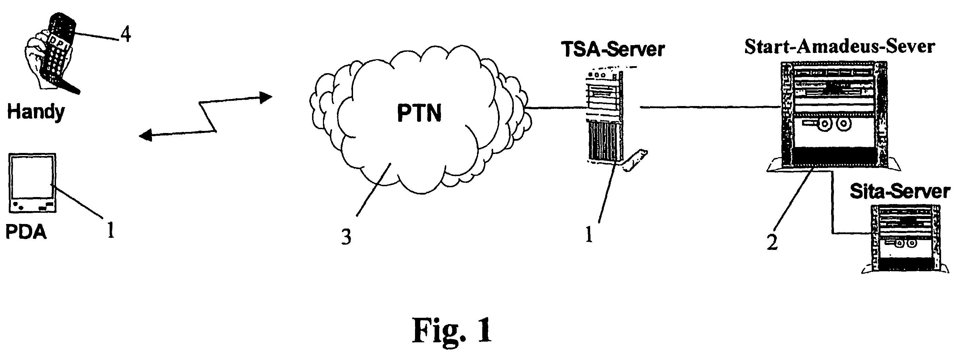

Fig. 1 zeigt schematisch eine erfindungsgemäße Anordnung zur Abwicklung von Mehrwertdiensten in den Bereichen Buchung und Reservierung über ein privates Telekommunikationsnetz (PTN) 3. Hierbei ermöglicht in beispielhafter Darstellung eine besondere Servereinrichtung, hier bezeichnet als TSA-Server 1 (Telekommunikations Service Agentur-Server) den Zugang von Telekommunikationskunden zu einem Serviceprovider 2, z.B. dem deutschen Start-Amadeus- bzw. zum internationalen Sita-System, mittels ihrer standardisierten Endgeräte, z.B. eines Mobilfunkendgerätes 4 oder eines Handheld-Computers 5, wodurch der Netzbetreiber bzw. der Betreiber des TSA-Servers 1 in der Lage ist, beispielsweise provisionsorientierte Mehrwertdienste in Verbindung mit dem Serviceprovider 2 (hier Start-Amadeus / Sita) seinen Kunden anzubieten.

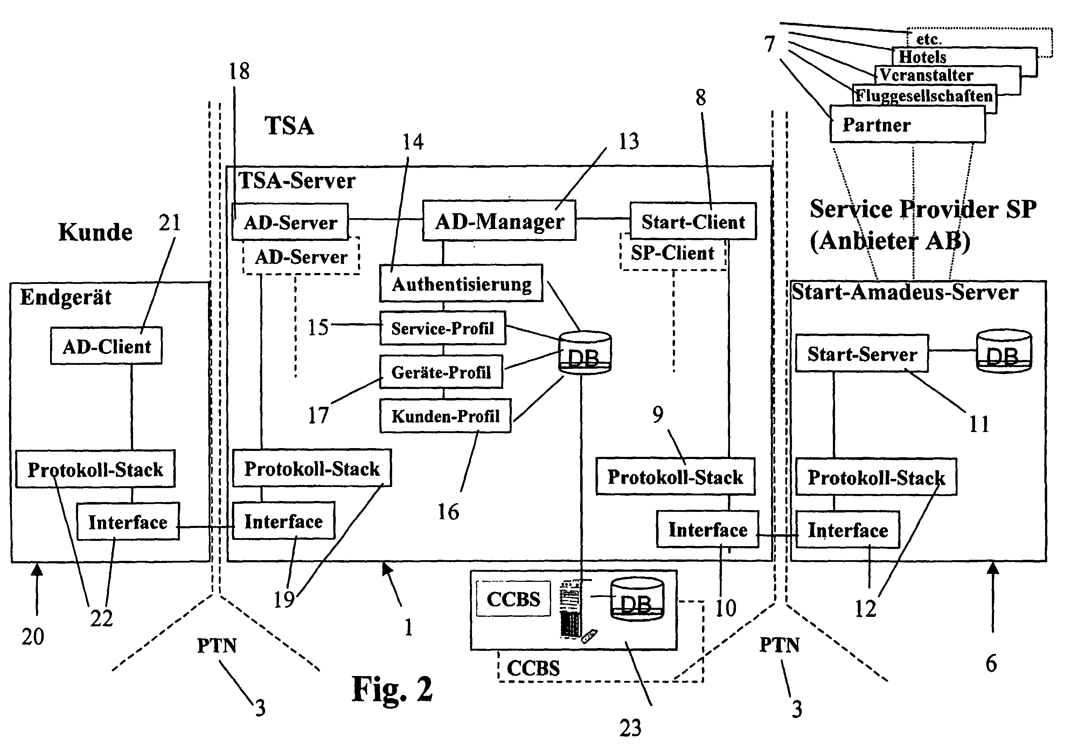

Gemäß Fig. 2 sind die funktionsspezifischen Aufgaben dargestellt. Der TSA-Server 1 von Figur 1 ist in dieser Darstellung einem Serviceprovider, nämlich einer Telekommunikations-Service-Agentur TSA, zugeordnet. Die TSA kann vorzugsweise der Telekomunikationsnetzbetreiber selbst sein, oder eine beliebige abhängige oder unabhängige Serviceagentur. Die TSA ist in der Regel über ein privates Telekommunikationsnetz 3 (oder mehrere) mit einerseits dem Anbieter / Serviceprovider AB/SP 2 und andererseits einem Endgerät 20 der Teilnehmer (Kunden) verbunden.

Der Serviceprovider SP 2 betreibt eine Servereinrichtung 6 zur Durchführung von Buchungen und Reservierungen, die einerseits mit externen Vertragsunternehmen 7, wie Veranstalter, Hotels, Fluggesellschaften, Mietwagengesellschaften etc. vernetzt ist, auf der anderen Seite den Agenturzugang durch Vertragsagenturen, wie z.B. Reisebüros, ermöglicht. Dabei stellt der Serviceprovider 2 Informationen sowie Buchungsmasken zur Verfügung, die in der Regel für eine Vielzahl oder für alle Umsatzmittler identisch sind und meist zusätzlich bestimmte Fachkenntnisse zur Bearbeitung voraussetzen. Der TSA-Server 1 verfügt daher optional über einen entsprechenden Client-Prozeß 8, der die Schnittstelle 9,10 (Protokolle 9 und physikalische Schnittstellen 10) zum SP-Serverprozeß 6 (Start-Server 11) über dessen Schnittstellen 12 bedient. Aufgabe des Start-Client 8 ist in diesem Fall die spezifische Bedienung des Start-Server 11 (automatische Tätigkeit der normalerweise händisch vorgenommenen Agenturfunktion im Reisebüro o.ä. und damit die Vermeidung telekommunikationsnetzspezifischer Implementierungen auf der SP-Seite.

Für den Fall, daß mehrere unterschiedliche SPs vergleichbarer Funktionalität seitens TSA bedient werden, sind bedarfsweise unterschiedliche SP-Clients 8 vorgesehen, die ihrerseits bedarfsweise unterschiedliche Schnittstellen 9, 10 (Protokolle und physikalische Schnittstellen) bedienen.
Ein Agenturdienste- (AD) Manager 13 ist zum Betrieb der TSA-spezifischen Dienste innerhalb des Gesamtangebotes der SP-Dienste zuständig. Er sorgt dafür, daß die entsprechend erforderlichen Teilinformationen zur Erfüllung der kundenseitig bereitgestellten Dienste aus den SP-Informationen selektiert und zum Kunden weitergeleitet werden und führt andererseits die erforderlichen kundenseitigen Informationen sowie die in der TSA vorhandenen, auf dem Kundenverhältnis basierenden Informationen, zwecks Weiterleitung an den SP zusammen. Hierzu steht er bedarfsweise mit zusätzlichen Einrichtungen zur Authentisierung 14, zur Festlegung des Service-Profils 15, zur Festlegung des Kundenprofils 16 sowie zur Festlegung des Endgeräte Profils 17 der Kunden sowie bedarfsweise mit weiteren Einrichtungen in Verbindung. Der AD-Serverprozeß 18 stellt über entsprechende Schnittstellen 19 (Protokolle und physikalische Schnittstellen) die Verbindung zum Kunden, d.h. zu dessen Endgerät 20 sicher und kommuniziert hierzu mit dem entsprechenden endgerätespezifischen AD-Client 21 über dessen Schnittstellen 22. Werden unterschiedliche Telekommunikationsnetze bedient, sind hier analog zum SP-Client des TSA-Servers, in der Regel entsprechend mehrere netzspezifische AD-Server-Prozesse 18 erforderlich.
Der AD-Client 21 stellt die Verbindung zwischen den geräteindividuellen optischen, akustischen und taktilen Einrichtungen des jeweiligen Endgerätes 20 und dem AD-Serverprozeß 18 her und ist somit vorrangig für die Präsentation der Dienste und die Bedienoberfläche (Benutzerinterface) zuständig. Die notwendigen netzspezifischen Signalisierungs- und verbindungsorientierten Komponenten haben keinen Einfluß auf die prinzipielle erfindungsgemäße Verfahrensweise und sind hier nicht dargestellt.
Zur Pflege bestehender Vertragsverhältnisse, zum Kundensupport sowie zur Erfassung und Abrechnung von kostenpflichtigen Ereignissen ist die optionale Verbindung zu zumindest einem Customer Care und Billing System vorgesehen. Wenn die TSA einem Telekommunikationsnetzbetreiber zugeordnet ist, handelt es sich dabei in der Regel um das vorhandene Customer Care und Billing Center 23 CCBS der Telekommunikationskunden.

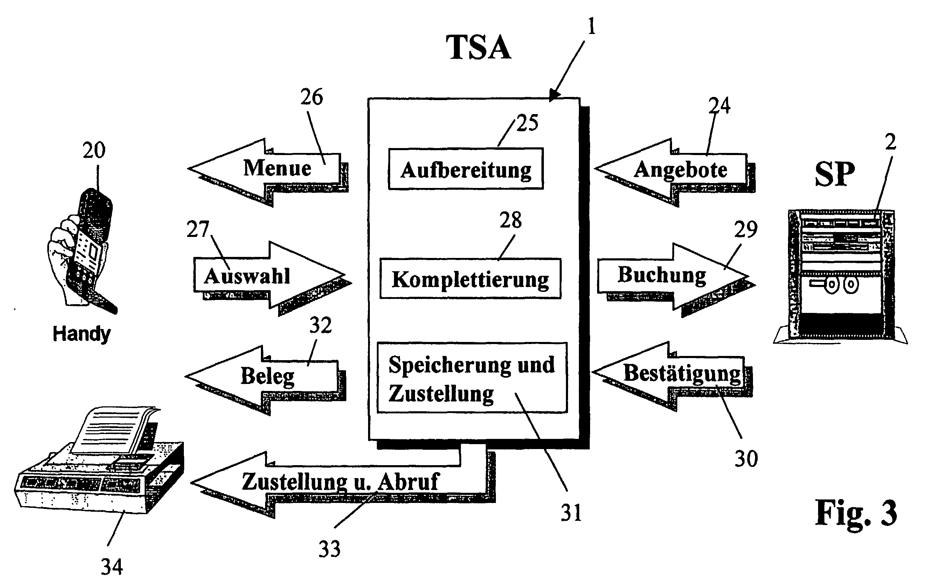

Fig. 3 verdeutlicht den prinzipiellen Datenfluß des erfindungsgemäßen Verfahrens. Der Serviceprovider 2 liefert Angebote 24, die seitens des TSA-Servers 1 aufbereitet und im Endgerät 20, z.B. strukturiert in Form eines Menüs 26, dargestellt werden. Dabei können hier zusätzlich TSA-spezifische Informationen, wie Sonderrabatte, ergänzende Informationen und Hinweise, Aktionen etc. hinzugefügt werden.
Der Kunde nimmt menügeführt eine entsprechende Auswahl 27 vor, wobei die "Dispositionsdaten" nach entsprechender Authentisierung des Kunden mit dessen Stammdaten des TSA komplettiert werden, 28. Hierunter fallen persönliche Daten, wie beispielsweise Name, Anschrift, Lieferanschrift, Alter, Buchungshöchstgrenzen, Rufnummern, Bankverbindung, Bonität etc. aber auch sonstige vertragsrelevante Daten, wie abonnierte Dienste, Freischaltungen, Abrechnungszeiträume, Limitierungen, Sperrungen, individuelle Paßworte, besondere Zahlungsweisen, Prioritäten etc.

Eine kontextorientierte bedarfsweise hergestellte Verbindung zum Customer Care mit optionaler Weiterleitung zum Customer Care des SP 2 komplettieren das Service-Angebot.
Anschließend erfolgt die automatische Buchung 29 (Disposition) beim SP 2. Die beim TSA 1 eingehende Bestätigung 30 wird optional im TSA 1 zwischengespeichert und gemäß der Kundenvereinbarung bedarfsweise zugestellt bzw. zur Abholung bereitgestellt 31, 33. Hierbei bietet sich die Kombination mit telekommunikationsspezifischen Leistungsmerkmalen, wie Abruf mittels Telefax 34, Faxweiterleitung etc.; oder die Zustellung per Unified Messaging System (Mail, Fax, GSM-SMS etc. an). Die Zustellung eines einfachen Belegs 32 an den Kunden ist ebenfalls möglich.
Der telekommunikationsnetzseitige Betrieb der Agenturdienste schließt die Erreichbarkeit der TSA für die entsprechenden Kunden über das öffentliche Internet mit ein, sodaß auch über diesen Weg die komplette Bedienung aller Dienste sowie das Beleg-Handling möglich ist. Die Authentisierungsprozedur muß für diesen Fall entsprechend erweitert werden, da die beispielsweise im Mobilfunkbereich übliche Kundenauthentisierung über die Mobilfunkkarte hier nicht möglich ist.

### Zeichnungslegende

- 1: TSA-Server
- 2: Serviceprovider
- 3: Privates Telekommunikationsnetz
- 4: Mobilfunkendgerät
- 5: Handheld-Computer
- 6: Servereinrichtung
- 7: externe Vertragsunternehmen
- 8: Serviceprovider-Client (z.B. Start-Client)
- 9: Protokolle
- 10: Schnittstelle
- 11: Start-Server
- 12: Schnittstelle
- 13: Agenturdienste-Manager
- 14: Authentisierung
- 15: Service-Profil
- 16: Kunden-Profil
- 17: Geräte-Profil
- 18: Agenturdienste-Server
- 19: Schnittstelle
- 20: Endgerät
- 21: Agenturdienste-Client
- 22: Schnittstelle
- 23: Customer Care und Billing Center
- 24: Angebote
- 25: Aufbereitung
- 26: Menü
- 27: Auswahl
- 28: Komplettierung
- 29: Buchung
- 30: Bestätigung
- 31: Speicherung und Zustellung
- 32: Beleg
- 33: Zustellung und Abruf
- 34: Faxgerät

- POP: Point of Presence
- ISP: Internet Service Provider
- TSA: Telekommunikations Service Agentur
- AB: Anbieter
- SP: Service Provider
- AD: Agenturdienste
- CCBC: Customer Care und Billing Center

## Patentansprüche

1. Verfahren zum Betrieb komfortabler Mehrwertdienste in Telekommunikationsnetzen, bei dem eine Servereinrichtung (1) funktional zwischen zumindest einem Telekommunikationsnetz (3) und zumindest einem Serviceprovider (2) derart angeordnet wird, daß die Servereinrichtung (1) eine Selektion und Aufbereitung in Bezug auf Inhalt und Qualität von auf elektronischem Wege vom Serviceprovider (2) empfangenen Daten für die dem Telekommunikationsnetz zugeordneten Teilnehmer unter Hinzuziehung vorgegebener teilnehmerspezifischer Daten vornimmt und dem Teilnehmer nach Durchführung einer entsprechenden Authentisierung in dessen Endgerät (20) präsentiert, sowie auf umgekehrtem Übertragungsweg eine vorliegende Selektion von Dienstleistungen des Teilnehmers einer Plausibilitätskontrolle zu vorgegebenen Konditionen unterzieht und um wiederum teilnehmerspezifische Daten komplettiert und die komplettierten Daten zum Serviceprovider (2) weiterleitet.

2. Verfahren gemäß Anspruch 1, **dadurch gekennzeichnet, daß** die vorgegebenen teilnehmerspezifischer Daten und vorgegebenen Konditionen im Kommunikationsnetz (3), in der Servereinrichtung (1), beim Serviceprovider (2) oder im Endgerät (20) abgespeichert werden.

3. Verfahren gemäß Anspruch 1 oder 2, **dadurch gekennzeichnet, daß** die Servereinrichtung (1) zur Authentisierung des Teilnehmers auf eine bereits im Kommunikationsnetz erfolgte Authentisierung des Teilnehmers zurückgreift.

4. Verfahren gemäß einem der Ansprüche 1 bis 3, **dadurch gekennzeichnet, daß** die Aufbereitung der vom Serviceprovider (2) bereitgestellten Daten in der Servereinrichtung (1) aus der endgerätegerechten Präsentation und der Benutzerführung unter Berücksichtigung der taktilen, akustischen und optischen Möglichkeiten des jeweiligen Endgerätes (20) des Teilnehmers besteht.

5. Verfahren gemäß einem der Ansprüche 1 bis 4, **dadurch gekennzeichnet, daß** die entsprechenden Dienste des Serviceproviders (2) in der Servereinrichtung (1) je nach teilnehmerspezifisch vereinbarter bzw. gewünschter oder konfigurierter Verfahrensweise in eine netzbetreiberseitige Menüstruktur oder ein Angebotsschema eines netzbetreiberseitigen Diensteangebotes eingebunden werden.

6. Verfahren gemäß Anspruch 5, **dadurch gekennzeichnet, daß** netzbetreiberseitige Änderungen und Ergänzungen, die sich aus dessen eigener Angebotsstruktur und dem Vertragsverhältnis mit dem Serviceprovider (2) ergeben in das Angebotsschema bzw. die Menüstruktur mit einfließen.

7. Verfahren gemäß Anspruch 5 oder 6, **dadurch gekennzeichnet, daß** auch die menümäßige Kombination von Diensten und Angeboten alternativer Serviceprovider in das Angebotsschema oder die Menüstruktur integriert werden.

8. Verfahren gemäß einem der Ansprüche 1 bis 7, **dadurch gekennzeichnet, daß** die Servereinrichtung (1) innerhalb des Telekommunikationsnetzes (3) angeordnet ist und zwecks automatischem Austausch von teilnehmer- und vertragsrelevanten Daten eine Schnittstelle zu entsprechenden Datenbanken (14-17) des Netzbetreibers sowie zum Zwecke der Gebührenabrechnung und für Administrations- und Servicezwecke eine Schnittstelle zu einem Customer Care und Billing Center CCBS (23) des Netzbetreibers besitzt.

9. Verfahren gemäß einem der Ansprüche 1 bis 8, **dadurch gekennzeichnet, daß** nach teilnehmerseitiger Produkt- und/oder Diensteauswahl zunächst eine automatische Analyse des teilnehmerseitigen Vertragsverhältnisses hinsichtlich zusätzlich vereinbarter Konditionen seitens der Servereinrichtung (1) durchgeführt wird und nach anschließender Komplettierung mit den teilnehmerspezifischen Daten gemäß mit dem jeweiligen Teilnehmer zuvor vereinbarten und ebenfalls abgespeicherten Umfang und Verfahren eine automatische Produkt- und/oder Diensteanforderung mit dem nunmehr vollständigen Datensatz beim entsprechenden Serviceprovider (2) erfolgt.

10. Verfahren gemäß Anspruch 9, **dadurch gekennzeichnet, daß** die Produktund/oder Diensteanforderung durch eine Bestätigung des Serviceproviders (2) abgeschlossen wird, wobei zumindest eine bedienoberflächengemäße Bestätigung im Endgerät (20) erfolgt.

11. Verfahren gemäß Anspruch 9 oder 10, **dadurch gekennzeichnet, daß** eine entsprechende vollständige Bestätigung der Produkt- und/oder Diensteanforderung mit allen relevanten Daten in der Servereinrichtung (1) angelegt und zum Abruf durch den Teilnehmer vorgehalten wird,

12. Verfahren gemäß einem der Ansprüche 9 bis 11, **dadurch gekennzeichnet, daß** eine automatische Zustellung einer Bestätigung der Produkt- und/oder Diensteanforderung nach einer zuvor vereinbarten Regelung automatisch unter Verwendung einer Unified Messaging Funktionalität des Netzbetreibers erfolgt.

13. Verfahren gemäß einem der Ansprüche 1 bis 12, **dadurch gekennzeichnet, daß** die Servereinrichtung (1) über einen entsprechend konfigurierten Internet-Zugang von den Telekommunikationsteilnehmern betrieben wird.

14. Verfahren gemäß einem der Ansprüche 1 bis 13, **dadurch gekennzeichnet, daß** die Servereinrichtung (1) als unabhängiges Servicecenter außerhalb des Telekommunikationsnetzes (3) betrieben wird und in dieser Anordnung in Erweiterung seiner eigenen Teilnehmer-(Kunden-)datenbank den Zugang zu den Teilnehmer-(Kunden-)datenbanken zumindest eines angeschlossenen Telekommunikationsnetzbetreibers oder Serviceproviders besitzt.

15. Verfahren gemäß einem der Ansprüche 1 bis 14, **dadurch gekennzeichnet, daß** die Servereinrichtung (1) beim Serviceprovider (2) angeordnet ist und in dieser Anordnung in Erweiterung seiner eigenen Teilnehmer-(Kunden-) datenbank den Zugang zu den Teilnehmer(Kunden-)datenbanken zumindest eines angeschlossenen Telekommunikationsnetzbetreibers sowie alternativ oder zusätzlich zu der Teilnehmer-(Kunden-)datenbank des Serviceproviders besitzt.

## Claims

1. Method for the operation of luxury value-added services in telecommunications networks, in which a server device (1) is functionally arranged between at least one telecommunications network (3) and at least one service provider (2) in such a way that the server device (1) performs a selection and processing with respect to content and quality of data received electronically by the service provider (2) for the subscribers assigned to the telecommunications network, consulting predetermined subscriber-specific data, and presents them to the subscriber after carrying out a corresponding authentication in his terminal (20), and, on the reverse transmission path, subjects an existing selection of services of the subscriber to a plausibility check on predetermined conditions and supplements it with data which are again subscriber-specific and transmits the supplemented data to the service provider (2).

2. Method according to claim 1, **characterised in that** the predetermined subscriber-specific data and predetermined conditions are stored in the communications network (3), in the server device (1), by the service provider (2) or in the terminal (20).

3. Method according to claim 1 or 2, **characterised in that** for authentication of the subscriber the server device (1) resorts to an authentication of the subscriber which has already been effected in the communications network.

4. Method according to one of claims 1 to 3, **characterised in that** processing of the data provided by the service provider (2) in the server device (1) consists of presentation according to terminal and user guidance, taking into consideration the tactile, acoustic and optical facilities of the respective terminal (20) of the subscriber.

5. Method according to one of claims 1 to 4, **characterised in that** the corresponding services of the service provider (2) in the server device (1) are, depending on the subscriber-specifically agreed or desired or configured procedure, linked to a menu structure on the network operator side or a provision scheme of a service provision on the network operator side.

6. Method according to claim 5, **characterised in that** amendments and additions on the network operator side, which arise from its own provision structure and the contractual relationship with the service provider (2), also enter the provision scheme or the menu structure.

7. Method according to claim 5 or 6, **characterised in that** the combination of services and offers of alternative service providers according to menu are also integrated in the provision scheme or the menu structure.

8. Method according to one of claims 1 to 7, **characterised in that** the server device (1) is arranged within the telecommunications network (3) and for the purpose of automatic exchange of data relevant to the subscriber and the contract has an interface to corresponding data banks (14-17) of the network operator and for the purpose of charge accounting and for administration and service purposes has an interface to a customer care and billing centre CCBS (23) of the network operator.

9. Method according to one of claims 1 to 8, **characterised in that**, after product and/or service selection on the subscriber side, first an automatic analysis of the contractual relationship on the subscriber side is carried out by the server device (1) with respect to additionally agreed conditions and, after subsequent supplementation with the subscriber-specific data according to the scope and method previously agreed with the respective subscriber and also stored, an automatic product and/or service request with the now complete data record is made to the corresponding service provider (2).

10. Method according to claim 9, **characterised in that** the product and/or service request is completed by a confirmation of the service provider (2), wherein at least one confirmation with respect to control surface is made in the terminal (20).

11. Method according to claim 9 or 10, **characterised in that** a corresponding full confirmation of the product and/or service request with all relevant data is established in the server device (1) and supplied for retrieval by the subscriber.

12. Method according to one of claims 9 to 11, **characterised in that** automatic delivery of a confirmation of the product and/or service request is effected automatically according to a previously agreed rule, using a unified messaging function of the network operator.

13. Method according to one of claims 1 to 12, **characterised in that** the server device (1) is operated by the telecommunications subscribers via a correspondingly configured internet access.

14. Method according to one of claims 1 to 13, **characterised in that** the server device (1) is operated as an independent service centre outside the telecommunications network (3) and in this arrangement has, in extension of its own subscriber (customer) data bank, access to the subscriber (customer) data banks of at least one connected telecommunications network operator or service provider.

15. Method according to one of claims 1 to 14, **characterised in that** the server device (1) is arranged at the service provider (2) and in this arrangement has, in extension of its own subscriber (customer) data bank, access to the subscriber (customer) data banks of at least one connected telecommunications network operator as well as, alternatively or additionally, to the subscriber (customer) data banks of the service provider.

## Revendications

1. Procédé pour exploiter des services à valeur ajoutée confortables dans des réseaux de télécommunication, selon lequel un dispositif formant serveur (1) est disposé fonctionnellement entre au moins un réseau de télécommunication (3) et au moins un fournisseur de service (2) de manière à effectuer une sélection et un traitement, relatif au contenu et à la qualité, de données reçues par voie électronique à partir du fournisseur de service (2) pour les abonnés associés au réseau de télécommunication, en utilisant des données prédéfinies propres aux abonnés, à présenter à l'abonné cette sélection et ce traitement dans son terminal (20), après une authentification appropriée, à soumettre, suivant une voie de transmission inverse, une sélection existante de prestations de service de l'abonné à un contrôle de plausibilité dans des conditions prédéfinies, à compléter là encore les données propres aux abonnés et à transmettre ces données complétées au fournisseur de service (2).

2. Procédé selon la revendication 1, **caractérisé en ce que** les données prédéfinies propres aux abonnés et les conditions prédéfinies sont mises en mémoire dans le réseau de communication (3), dans le dispositif formant serveur (1), chez le fournisseur de service (2) ou dans le terminal (20).

3. Procédé selon la revendication 1 ou 2, **caractérisé en ce que** le dispositif formant serveur (1) a recours, pour authentifier l'abonné, à une authentification de l'abonné qui a déjà eu lieu dans le réseau de communication.

4. Procédé selon l'une des revendications 1 à 3, **caractérisé en ce que** le traitement des données fournies par le fournisseur de service (2) dans le dispositif formant serveur (1) se composent de la présentation conforme au terminal et du guidage de l'utilisateur compte tenu des possibilités tactiles, acoustiques et optiques du terminal (20) de l'abonné.

5. Procédé selon l'une des revendications 1 à 4, **caractérisé en ce que** les services correspondants du fournisseur de service (2) dans le dispositif formant serveur (1) sont intégrés, suivant une procédure convenue ou souhaitée propre à l'abonné ou configurée, dans une structure de menu prévue côté exploitant du réseau ou dans un schéma d'offre d'une offre de service prévue côté exploitant du réseau.

6. Procédé selon la revendication 5, **caractérisé en ce que** les modifications et compléments qui sont apportés côté exploitant du réseau et qui résultent de sa propre structure d'offre et du rapport contractuel avec le fournisseur de service (2) sont intégrés eux aussi dans le schéma d'offre ou dans la structure de menu.

7. Procédé selon la revendication 5 ou 6, **caractérisé en ce que** la combinaison de menu de services et d'offres d'autres fournisseurs de service est intégrée elle aussi dans le schéma d'offre ou dans la structure de menu.

8. Procédé selon l'une des revendications 1 à 7, **caractérisé en ce que** le dispositif formant serveur (1) est disposé à l'intérieur du réseau de télécommunication (3) et comporte, en vue de l'échange automatique de données importantes pour l'abonné et pour le contrat, une interface avec des banques de données appropriées (14-17) de l'exploitant du réseau, et, en vue de la facturation et à des fins de gestion et de service, une interface avec un centre de facturation CCBS (23) de l'exploitant du réseau.

9. Procédé selon l'une des revendications 1 à 8, **caractérisé en ce qu'**après une sélection de produit et/ou de service, côté abonné, une analyse automatique du rapport de contrat côté abonné est tout d'abord réalisée et porte sur les conditions convenues en supplément du côté du dispositif formant serveur (1), et après l'adjonction consécutive des données propres à l'abonné suivant l'étendue et le procédé convenus précédemment avec l'abonné et également mis en mémoire, une demande automatique de produit et/ou de service a lieu avec le jeu de données désormais complet auprès du fournisseur de service (2) correspondant.

10. Procédé selon la revendication 9, **caractérisé en ce que** la demande de produit et/ou de service se termine par une confirmation du fournisseur de service (2), au moins une confirmation par surface de commande ayant lieu dans le terminal (20).

11. Procédé selon la revendication 9 ou 10, **caractérisé en ce qu'**une confirmation complète correspondante de la demande de produit et/ou de service est appliquée avec toutes les données importantes dans le dispositif formant serveur (1) et est présentée pour une demande par l'abonné.

12. Procédé selon l'une des revendications 9 à 11, **caractérisé en ce qu'**une remise automatique d'une confirmation de la demande de produit et/ou de service a lieu automatiquement et à l'aide d'une fonction de messagerie unifiée de l'exploitant du réseau, d'après une régulation convenue préalablement.

13. Procédé selon l'une des revendications 1 à 12, **caractérisé en ce que** le dispositif formant serveur (1) est exploité par les abonnés de télécommunication par l'intermédiaire d'un accès Internet configuré en conséquence.

14. Procédé selon l'une des revendications 1 à 13, **caractérisé en ce que** le dispositif formant serveur (1) est exploité à l'extérieur du réseau de télécommunication (3) comme centre de service indépendant et a accès dans cet agencement, dans le prolongement de sa propre banque de données d'abonnés (de clients), aux banques de données d'abonnés (de clients) d'au moins un exploitant de réseau de télécommunication ou fournisseur de service raccordé.

15. Procédé selon l'une des revendications 1 à 14, **caractérisé en ce que** le dispositif formant serveur (1) est disposé chez le fournisseur de service (2) et a accès dans cet agencement, dans le prolongement de sa propre banque de données d'abonnés (de clients), aux banques de données d'abonnés (de clients) d'au moins un exploitant de réseau de télécommunication ou fournisseur de service raccordé et, à titre de variante ou en supplément, à la banque de données d'abonnés (de clients) du fournisseur de service.
